# EUROPEAN PATENT APPLICATION

(11) **EP 4 520 554 A1**
(43) Date of publication of application: **12.03.2025**
(21) Application number: 23195453.8
(22) Date of filing: 05.09.2023
(51) Int. Cl.: B60C 23/06, B60K 1/02

(54) **METHOD FOR MONITORING A TIRE PRESSURE OF A VEHICLE, DATA PROCESSING APPARATUS, COMPUTER PROGRAM, COMPUTER-READABLE STORAGE MEDIUM, SYSTEM FOR MONITORING A TIRE PRESSURE OF A VEHICLE, AND USES**

(71) Applicant: Volvo Car Corporation, 405 31 Göteborg (SE)
(72) Inventor: DHINGRA, Vishisht, 40531 Göteborg (SE)
(74) Representative: Maiwald GmbH

(57) **Abstract**

The disclosure relates to a method for monitoring a tire pressure of a vehicle (10). The vehicle (10) has at least one wheel (12) with at least one tire (14). Moreover, the vehicle (10) comprises at least one wheel-specific electric drive machine (20) associated with the at least one wheel (12). The method comprises receiving first data (D1) indicative of a torque provided by the at least one wheel-specific electric drive machine (20). Additionally or alternatively, the method comprises receiving second data (D2) indicative of a rotational speed of the at least one wheel-specific electric drive machine (20). Furthermore, the method comprises evaluating a deviation of a current tire pressure from an expected tire pressure based on the received first data (D1) and/or based on the received second data (D2). Also a data processing apparatus (40), a computer program (48) and a computer-readable storage medium (46) are shown. Moreover, a system (26) for monitoring a tire pressure of a vehicle (10) is explained. Additionally, uses are presented.

## Description

### TECHNICAL FIELD

The present disclosure relates to a method for monitoring a tire pressure of a vehicle having at least one wheel with at least one tire.

Moreover, the present disclosure is directed to a data processing apparatus, a computer program and a computer-readable storage medium.

The present disclosure additionally relates to a system for monitoring a tire pressure of a vehicle having at least one wheel with at least one tire.

The present disclosure also relates to uses.

### BACKGROUND ART

Monitoring a tire pressure of a vehicle's tires is known. In doing so, an undesired decrease of the tire pressure of one or more tires can be detected and a driver of the affected vehicle can be informed accordingly. Thus, the driver can adapt his or her driving behavior and/or can start countermeasures, i.e. inflate, repair or change the affected tire. In the context of tire pressure monitoring, tires are understood as pneumatic tires and the pressure to be monitored is an internal pressure of the tires.

Known tire pressure monitoring systems may be categorized as direct or indirect tire pressure monitoring systems. In direct tire pressure monitoring systems, the tire pressure is monitored using one or more pressure sensors. In other words, the relevant tire pressure is determined directly. In contrast thereto, indirect tire pressure monitoring systems do not use pressure sensors. In such tire pressure monitoring systems, an undesired decrease of the tire pressure may be derived based on a detection result of a sensor other than a pressure sensor. In this context, known tire pressure monitoring systems use wheel speed sensors. An undesired decrease of the tire pressure is derived from an unexpected increase of a wheel speed since reduced tire pressure has the effect that the relevant radius of the tire decreases.

### SUMMARY

It is an objective of the present disclosure to further improve methods and systems for tire pressure monitoring.

The problem is at least partially solved or alleviated by the subject matter of the independent claims of the present disclosure, wherein further examples are incorporated in the dependent claims.

According to a first aspect, there is provided a method for monitoring a tire pressure of a vehicle having at least one wheel with at least one tire. Moreover, the vehicle has at least one wheel-specific electric drive machine associated with the at least one wheel. The method comprises:
- receiving first data indicative of a torque provided by the at least one wheel-specific electric drive machine and/or receiving second data indicative of a rotational speed of the at least one wheel-specific electric drive machine, and
- evaluating a deviation of a current tire pressure from an expected tire pressure based on the received first data and/or based on the received second data.

Evaluating a deviation of a current tire pressure from an expected tire pressure may result in determining a deviation of a current tire pressure from an expected tire pressure, i.e. result in determining that the current tire pressure and the expected tire pressure are different, or may result in determining that the current tire pressure does not deviate from the expected tire pressure, i.e. result in determining that the current tire presser substantially corresponds to the expected tire pressure. In this method, data describing or characterizing an operation of the wheel-specific electric drive machine, i.e. first data indicative of a torque provided by the at least one wheel-specific electric drive machine and/or second data indicative of a rotational speed of the at least one wheel-specific electric drive machine, is used as a basis for evaluating a deviation of a current tire pressure from an expected tire pressure. Such data may be provided by one or more sensors associated with the wheel-specific electric drive machine. This is in contrast to known methods for monitoring a tire pressure which use data describing or characterizing an operation of the relevant wheel. Consequently, in known systems, one or more sensors associated with the wheel are used. Using data describing or characterizing and operation of the wheel-specific electric drive machine enhances the accuracy and reliability of tire pressure monitoring, since data describing or characterizing an operation of the wheel-specific electric drive machine may be determined with higher accuracy as compared to data describing or characterizing an operation of the wheel. Moreover, sensors for providing such data are less exposed to an environment such that they may be operated in a highly reliable manner.

The method of the present disclosure may further comprise the use of first data indicative of a torque provided by the at least one wheel-specific electric drive machine. Known methods do not use data indicative of a torque. However, it has been found that data indicative of a torque is well suitable for evaluating a deviation of a current tire pressure from an expected tire pressure. Thus, using data indicative of a torque leads to an accurate and reliable monitoring of tire pressure. The underlying physical effect relates to the fact that a change in tire pressure leads to a change of the friction between the affected tire and the road surface. As a consequence thereof, the torque provided for the affected wheel needs to be adapted accordingly in order to keep the speed and/or orientation of the vehicle.

It is noted that the method according to the present disclosure covers three alternatives. In a first alternative, first data indicative of a torque provided by the at least one wheel-specific electric drive machine is received and a deviation of a current tire pressure from an expected tire pressure is evaluated based on the received first data. In a second alternative, second data indicative of a rotational speed of the at least one wheel-specific electric drive machine is received and a deviation of a current tire pressure from an expected tire pressure is evaluated based on the received second data. In a third alternative, both first data and second data are received and a deviation of a current tire pressure from an expected tire pressure is based on both the received first data and the received second data. While accurate and reliable tire pressure monitoring is possible in all three alternatives, the third alternative is characterized by a certain redundancy of the first data and the second data. Consequently, the method according to the third alternative is particularly reliable.

In the context of the present method, the first data and/or the second data may be received directly from the wheel-specific electric drive machine. In an example, the sensors providing the first data and/or the second data form part of the wheel-specific electric drive machine or are mechanically attached to the wheel-specific electric drive machine.

It is understood that in the context of the present disclosure, a relevant deviation of a current tire pressure from an expected tire pressure relates to a current tire pressure being lower than the expected tire pressure. In such a situation, the relevant tire has lost pressure. An alternative term for designating such a situation is a low-pressure event. This means that the method for monitoring tire pressure is able to detect low-pressure events.

According to an example, the method of the present disclosure is executed if the vehicle is traveling along a straight road segment or along a curved segment with a constant radius. Such driving situations may be summarized as stable driving situations. In these driving situations, effects reducing the accuracy of the tire pressure monitoring are comparatively small or excluded. Moreover, it is comparatively simple to obtain an expected tire pressure for such driving situations. Altogether, executing the method of the present disclosure in stable driving situations further increases the accuracy and reliability.

According to an example, evaluating a deviation of a current tire pressure from an expected tire pressure is further based on historic first data and/or historic second data. In this context, the term historic means dating from a past time. Thus, evaluating a deviation of the current tire pressure from an expected tire pressure is based on both current first data and/or current second data and historic first data and/or historic second data. Consequently, current first data and historic first data may be compared. The same applies to current second data and historic second data. In doing so, it is possible to detect an increase or decrease of a torque provided by the at least one wheel-specific electric drive machine. Additionally or alternatively, it is possible to detect an increase or decrease of a rotational speed of the at least one wheel-specific electric drive machine. As has been explained before, a torque provided by the at least one wheel-specific electric drive machine usually increases as a consequence of reduced tire pressure. A rotational speed of a wheel suffering from reduced tire pressure usually increases as well. The historic data may be used as a reference for determining an increase or decrease. Altogether, tire pressure may be monitored in an accurate manner.

According to an example, evaluating a deviation of a current tire pressure from an expected tire pressure is further based on auxiliary first data indicative of a torque provided by another wheel-specific electric drive machine and/or auxiliary second data indicative of a rotational speed of another wheel-specific electric drive machine. Thus, in this context, the vehicle comprises at least two wheels wherein each wheel comprises a tire and each wheel is associated with a wheel-specific electric drive machine. Evaluating a deviation of a current tire pressure from an expected tire pressure may, thus, be based on a comparison of first data to auxiliary first data and/or second data to auxiliary second data. In simplified words, a deviation of a current tire pressure from an expected tire pressure may be evaluated by comparing characteristics of one wheel to characteristics of another wheel. It is noted that such a comparison does not necessarily imply that the characteristics of both wheels need to be the same if the current tire pressure substantially equals the expected tire pressure. For example if the vehicle is traveling along a curve, the characteristics of the inside wheel of course differ from the characteristics of the outside wheel. However, the difference between these characteristics is well-defined. In all variants, using auxiliary first data and/or auxiliary second data leads to an accurate and reliable evaluation of a deviation of a current tire pressure from an expected tire pressure.

In another example, the expected tire pressure is predefined. For example, the expected tire pressure has a fixed value. The expected tire pressure may correspond to a tire pressure setting. The predefined tire pressure may be provided in a manual of the vehicle or on a data storage medium. Consequently, the expected tire pressure is provided in a simple and reliable manner. Based thereon, a deviation of a current tire pressure may be evaluated in a precise and reliable manner.

According to an example, the method further comprises determining one or more of the expected tire pressure, expected first data or expected second data. Thus, in this example, one or more of the expected tire pressure, expected first data or expected second data is not predefined. Rather, one or more of the expected tire pressure, the expected first data or the expected second data is determined when executing the method for monitoring a tire pressure. This may be done as a function of a current driving situation of the vehicle. In this context, one may distinguish between a situation in which the vehicle travels along a straight road segment or along a curved road segment. A representation of the vehicle, such as a model, may be used when determining one or more of an expected tire pressure, expected first data or expected second data. Such a model may form part of a simulation. Consequently, one or more of the expected tire pressure, expected first data or expected second data may be determined using a simulation. This has the advantage that one or more of the expected tire pressure, expected first data or expected second data may be updated as a function of a driving situation while the vehicle is traveling. For example, one or more of the expected tire pressure, expected first data or expected second data may be regularly updated. Altogether, one or more of the expected tire pressure, expected first data or expected second data may be determined in an accurate manner. Based thereon, a deviation of a current tire pressure from an expected tire pressure may be evaluated in a reliable and accurate manner.

According to an example, the method further comprising receiving third data indicative of a rotational speed of the at least one wheel and evaluating the deviation based on the received third data. It is noted that the third data is different from the second data in that the third data is indicative of a rotational speed of the at least one wheel and the second data is indicative of the rotational speed of the at least one wheel-specific electric drive machine. However, since the wheel-specific electric drive machine is mechanically coupled to the wheel, the third data and the second data are not completely independent but rather offer a certain redundancy. This redundancy may be used for verifying the second data using the third data or vice versa. This enhances the reliability of the second data or third data and consequently the reliability when evaluating a deviation of a current tire pressure from an expected tire pressure.

In an example, the method further comprises receiving fourth data indicative of a wheel slip associated with the at least one wheel and evaluating the deviation only if the received fourth data is indicative of a wheel slip inferior to a wheel slip threshold. In this context, a wheel slip may be indicated by a wheel slip ratio. The wheel slip ratio may be a percentage designating a difference between a calculated forward speed of a vehicle based on angular speed and a rolling radius of the wheels and an actual speed of the vehicle. Since a comparatively large wheel slip may have an impact on the first data and/or the second data, evaluating the deviation only if the received fourth data is indicative of a wheel slip inferior to a wheel sleep threshold improves the accuracy of evaluating a deviation of a current tire pressure from an expected tire pressure.

In an example, the first data indicative of the torque is indicative of a current and/or a voltage associated with the at least one wheel-specific electric drive machine. In other words, the torque provided by the at least one wheel-specific electric drive machine may be determined based on a current and/or a voltage associated with the wheel-specific electric drive machine. This means that the torque is measured indirectly by measuring the current and/or the voltage. In order to do so, a comparatively simple and compact current sensor and/or voltage sensor may be used. A dedicated torque sensor is not needed. Thus, the first data may be provided in a simple, but still accurate and reliable manner.

The method according to the present disclosure may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the present disclosure. Using such a data processing apparatus, tire pressure of a vehicle having at least one wheel with at least one tire may be monitored in an accurate and reliable manner. The examples, effects and advantages which have been mentioned in connection with the method according to the present disclosure also apply to the data processing apparatus according to the present disclosure.

According to a third aspect, there is provided a computer program comprising instructions which, when the computer program is executed by a computer, cause the computer to carry out the method of the present disclosure. Using such a computer program, tire pressure of a vehicle having at least one wheel with at least one tire may be monitored in an accurate and reliable manner. The examples, effects and advantages which have been mentioned in connection with the method according to the present disclosure also apply to the computer program according to the present disclosure.

According to a fourth aspect, there is provided a computer-readable storage medium comprising instructions which, when executed by a computer, cause the computer to carry out the method of the present disclosure. Using such a computer-readable storage medium, tire pressure of a vehicle having at least one wheel with at least one tire may be monitored in an accurate and reliable manner. The examples, effects and advantages which have been mentioned in connection with the method according to the present disclosure also apply to the computer-readable storage medium according to the present disclosure.

According to a fifth aspect, there is provided a system for monitoring a tire pressure of a vehicle having at least one wheel with at least one tire. Moreover, the vehicle has at least one wheel-specific electric drive machine associated with the at least one wheel. The system comprises:
- a torque sensor associated with the at least one wheel-specific electric drive machine and/or a rotational speed sensor associated with the at least one wheel-specific electric drive machine, and
- a data processing apparatus of the present disclosure, wherein the data processing apparatus is communicatively connected to the torque sensor and/or the rotational speed sensor.

In such a system, data describing or characterizing an operation of the wheel-specific electric drive machine, i.e. first data indicative of a torque provided by the at least one wheel-specific electric drive machine and/or second data indicative of a rotational speed of the at least one wheel-specific electric drive machine, may be provided by the torque sensor and/or the rotational speed sensor associated with the at least one wheel-specific electric drive machine. Based thereon, using the data processing apparatus, it is possible to evaluate a deviation of a current tire pressure from an expected tire pressure. In contrast to known systems for monitoring a tire pressure which use wheel sensors, the present system uses a torque sensor associated with the at least one wheel-specific electric drive machine and/or a rotational speed sensor associated with the at least one wheel-specific electric drive machine. Such sensors may determine the torque and/or rotational speed with higher accuracy as compared to wheel sensors. Moreover, sensors associated with the at least one wheel-specific electric drive machine are less exposed to an environment such that they may be operated in a highly reliable manner.

The system of the present disclosure may further comprise a torque sensor. Known systems for monitoring tire pressure do not use torque sensors. However, it has been found that using a torque sensor is well suitable for evaluating a deviation of a current tire pressure from an expected tire pressure. Thus, using a torque sensor leads to an accurate and reliable monitoring of tire pressure. As has been mentioned before, the underlying physical effect relates to the fact that a change in tire pressure leads to a change of the friction between the affected tire and the road surface. As a consequence thereof, the torque provided for the affected wheel needs to be adapted accordingly in order to keep the speed and/or orientation of the vehicle.

It is noted that the system according to the present disclosure covers three alternatives. In a first alternative, the system comprises a torque sensor and, thus, a deviation of a current tire pressure from an expected tire pressure is evaluated using the torque sensor. In a second alternative, the system comprises a rotational speed sensor and, thus, a deviation of a current tire pressure from an expected tire pressure is evaluated using the rotational speed sensor. In a third alternative, the system comprises both a torque sensor and a rotational speed sensor and, thus, a deviation of a current tire pressure from an expected tire pressure is evaluated using both the torque sensor and the rotational speed sensor. While accurate and reliable tire pressure monitoring is possible in all three alternatives, the third alternative is characterized by a certain redundancy of the torque sensor and the rotational speed sensor. Consequently, the system according to the third alternative is particularly reliable.

According to an example, the torque sensor may be a motor torque encoder and/or the rotational speed sensor may be a motor speed encoder.

In an example, the system further comprises a rotational speed sensor associated with the at least one wheel. It is noted that the rotational speed sensor associated with the at least one wheel is different from the rotational speed sensor associated with the at least one wheel-specific electric drive machine. However, since the wheel-specific electric drive machine is mechanically coupled to the wheel, the outputs of these sensors are not completely independent but rather offer a certain redundancy. This redundancy may be used for verifying the data provided by one of the rotational speed sensors using the data provided by the respective other rotational speed sensor. This enhances the reliability of evaluating a deviation of a current tire pressure from an expected tire pressure.

According to a sixth aspect, there is provided a use of first data indicative of a torque provided by a wheel-specific electric drive machine and/or second data indicative of a rotational speed of a wheel-specific electric drive machine for monitoring a tire pressure of a vehicle. Thus, data describing or characterizing an operation of the wheel-specific electric drive machine, i.e. first data indicative of a torque provided by the at least one wheel-specific electric drive machine and/or second data indicative of a rotational speed of the at least one wheel-specific electric drive machine, is used for monitoring a tire pressure of a vehicle, i.e. as a basis for evaluating a deviation of a current tire pressure from an expected tire pressure. Such data may be provided by one or more sensors associated with the wheel-specific electric drive machine. This is in contrast to known ways for monitoring a tire pressure which use data describing or characterizing an operation of the relevant wheel. Consequently, in known systems, one or more sensors associated with the wheel are used. Using data describing or characterizing an operation of the wheel-specific electric drive machine enhances the accuracy and reliability of tire pressure monitoring, since data describing or characterizing an operation of the wheel-specific electric drive machine may be determined with higher accuracy as compared to a data describing or characterizing and operation of the wheel. Moreover, sensors for providing such data are less exposed to an environment such that they may be operated in a highly reliable manner.

According to a seventh aspect, there is provided a use of a torque sensor associated with a wheel-specific electric drive machine and/or a rotational speed sensor associated with a wheel-specific electric drive machine in a system for monitoring a tire pressure of a vehicle. Thus, data describing or characterizing an operation of the wheel-specific electric drive machine, i.e. first data indicative of a torque provided by the at least one wheel-specific electric drive machine and/or second data indicative of a rotational speed of the at least one wheel-specific electric drive machine, may be provided by the torque sensor and/or the rotational speed sensor associated with the at least one wheel-specific electric drive machine. Based thereon, it is possible to evaluate a deviation of a current tire pressure from an expected tire pressure. In contrast to known systems for monitoring tire pressure which use wheel sensors, the present disclosure suggests using a torque sensor associates with the at least one wheel-specific electric drive machine and/or a rotational speed sensor associated with the at least one wheel-specific electric drive machine. Such sensors may determine the torque and/or rotational speed with higher accuracy as compared to wheel sensors. Moreover, sensors associated with the at least one wheel-specific electric drive machine are less exposed to an environment such that they may be operated in a highly reliable manner.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle comprising a system according to the present disclosure for monitoring a tire pressure, wherein the system comprises a data processing apparatus according to the present disclosure, a computer program according to the present disclosure and a computer-readable storage medium according to the present disclosure, wherein a method for monitoring a tire pressure may be executed using the system, and
- Figure 2: illustrates steps of the method for monitoring a tire pressure.

### DETAILED DESCRIPTION

The Figures are merely schematic representations and serve only to illustrate examples of the disclosure. Identical or equivalent elements are in principle provided with the same reference signs.

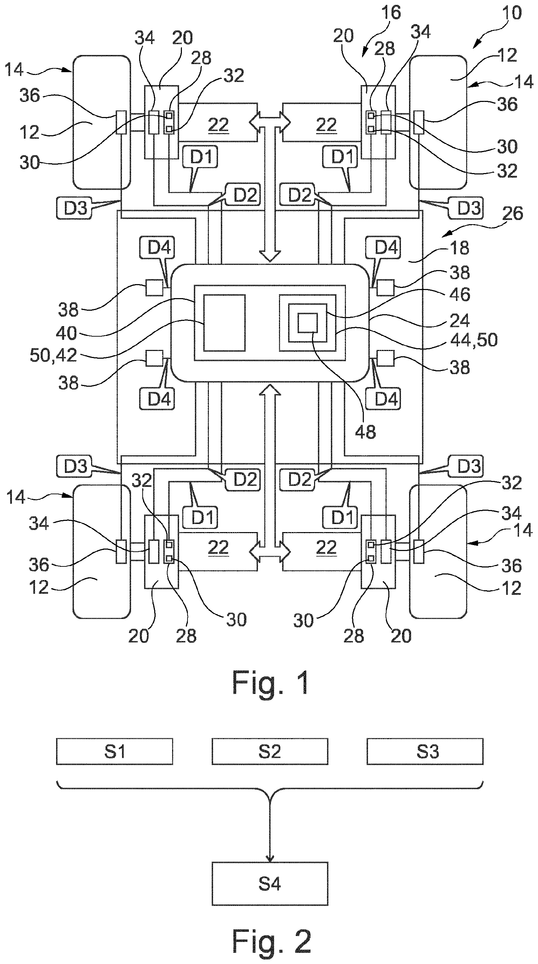

Figure 1 shows a vehicle 10 which in the present example is a battery electric vehicle.

The vehicle comprises four wheels 12 which each comprise a tire 14. It is noted that even though, of course, the four wheels and the four tires are separate from one another, all the wheels 12 are designated with the same reference sign and all the tires are designated with the same reference sign for ease of explanation.

All the tires 14 are pneumatic tires.

Moreover, the vehicle 10 comprises a drivetrain 16.

The drivetrain comprises a battery 18 and one wheel-specific electric drive machine 20 for each of the wheels 12. This means that each wheel-specific electric drive machine 20 is drivingly coupled to a single one of the wheels 12. At the same time, each of the wheels 12 is drivingly coupled to a single one of the wheel-specific electric drive machines 20. This means that the wheels 12 and the wheel-specific electric drive machines 20 are in a 1:1 relationship.

Each of the wheel-specific electric drive machines 20 is electrically coupled to the battery 18 via an inverter unit 22.

Additionally, the vehicle 10 comprises a control unit 24. The control unit 24 is communicatively connected to the battery 18 and to each of the inverter units 22 such that an operation of each of the wheel-specific electric drive machines 20 may be controlled by controlling the associated inverter unit 22.

The vehicle 10 is further equipped with a system 26 for monitoring tire pressure. In the present example, the system 26 is configured to monitor the pressure in each of the tires 14. It is, however, also imaginable that the system 26 is only configured to monitor the pressure of a subset of the tires 14 only.

The system 26 for monitoring tire pressure comprises a total of four torque sensors 28, wherein each of the torque sensors 28 is associated with one of the vehicle-specific electric drive machines 20. In the present example, all four torque sensors 28 are embedded into the associated wheel-specific electric drive machine 20. Consequently, each of the four torque sensors 28 is configured to provide first data D1 indicative of a torque provided by the associated wheel-specific electric drive machine 20.

All torque sensors 28 are communicatively connected to the control unit 24.

Even though designated and represented as torque sensors 28 in the present example, the torque sensors 28 do not directly measure a torque provided by the associated wheel-specific electric drive machine 20. Rather, each torque sensor 28 comprises a current sensor 30 configured to measure an electric current of the associated wheel-specific electric drive machine 20 and a voltage sensor 32 configured to measure an electric voltage of the associated wheel-specific electric drive machine 20. The torque may be derived from the measured electric current and the electric voltage.

The system 26 for monitoring tire pressure further comprises a total of four rotational speed sensors 34, wherein each of the rotational speed sensors 34 is associated with one of the vehicle-specific electric drive machines 20. In the present example, all four rotational speed sensors 34 are embedded into the associated wheel-specific electric drive machine 20. Consequently, each of the four rotational speed sensors 34 is configured to provide second data D2 indicative of a rotational speed of the associated wheel-specific electric drive machine 20.

All rotational speed sensors 34 are communicatively connected to the control unit 24.

Additionally, the system 26 for monitoring tire pressure comprises a total of four rotational speed sensors 36, wherein each of the rotational speed sensors 36 is associated with one of the wheels 12. In the present example, all four rotational speed sensors 36 are attached to the associated wheel 12. Consequently, each of the four rotational speed sensors 36 is configured to provide third data D3 indicative of a rotational speed of the associated wheel 12.

All rotational speed sensors 36 are communicatively connected to the control unit 24.

Moreover, the system 26 for monitoring tire pressure comprises a total of four means 38 for determining a wheel slip of an associated wheel 12. Since the calculation of a wheel slip is known as such, the means 38 for determining a wheel slip are only represented schematically. The means 38 are configured to provide fourth data D4 indicative of a wheel slip of the associated wheel 12.

The system 26 for monitoring tire pressure also comprises a data processing apparatus 40.

In the present example, the data processing apparatus 40 forms part of the control unit 24.

The data processing apparatus 40 is communicatively connected to all four torque sensors 28, i.e. to all four current sensors 30 and all four voltage sensors 32, to all four rotational speed sensors 34, to all four rotational speed sensors 36 and all four means 38 for determining a wheel slip.

The data processing apparatus 14 comprises a data processing unit 42 and a data storage unit 44.

The data storage unit 44 comprises a computer-readable storage medium 46.

On the computer-readable storage medium 46, and thus, also on the data storage unit 44, there is provided a computer program 48.

The computer program 48 and, thus, also the computer-readable storage medium 46, comprise instructions which, when executed by the data processing unit 42 or, more generally speaking, a computer cause the data processing unit 42 or the computer to carry out a method for monitoring a tire pressure of the vehicle 10.

Consequently, the data processing unit 42 and the data storage unit 44 form means 50 for carrying out the method for monitoring a tire pressure of a vehicle.

In the following, the method for monitoring the tire pressure of the vehicle 10 will be explained in more detail.

It is noted that this method needs to be executed for each wheel 12. According to an example, the method is executed for each wheel 12 in a sequential manner, e.g. first for the wheel represented in the top left corner of Figure 1, then for the wheel represented in the top right corner of Figure 1, then for the wheel represented in the lower right corner of Figure 1, then for a wheel represented in the lower left corner of Figure 1 and then starting again with the wheel represented in the top left corner of Figure 1.

Since, independent from the specific wheel 12, the method is always the same, the method will only be explained once in the following. This explanation applies to each of the wheels 12.

Moreover, the following explanation of the method is based on a driving scenario in which the vehicle 10 travels along a substantially straight road segment at a substantially constant speed.

In a first step S1, first data D1 indicative of a torque provided by the wheel-specific electric drive machine 20 and second data D2 indicative of a rotational speed of the wheel-specific electric drive machine 20 are received.

The first data D1 and the second data D2 are received at the data processing apparatus 40 and are provided by the respective torque sensor 28 and rotational speed sensor 34.

As has been mentioned before, the torque is actually measured using a current sensor 30 and a voltage sensor 32. Consequently, the first data D1 is also indicative of a current and a voltage of the wheel-specific electric drive machine 20.

In a second step S2, third data D3 indicative of the rotational speed of the wheel 12 is received.

As before, the third data D3 is received at the data processing apparatus 40 and the third data D3 is provided by the rotational speed sensor 36.

Moreover, in a third step S3, fourth data D4 indicative of a wheel slip associated with the wheel 12 is received.

Also the fourth data D4 is received at the data processing apparatus 40. The fourth data D4 is provided by the means 38 for determining a wheel slip.

It is noted that the first step, the second step and the third step may be executed in a time parallel manner.

In a fourth step S4, a deviation of a current tire pressure from an expected tire pressure is evaluated based on the received first data D 1, the received second data D2, the received third data D3 and the received fourth data D4.

In more detail, in the context of the fourth step S4, the wheel slip of which the fourth data D4 is indicative, is compared to a wheel slip threshold provided on the data storage unit 44, more precisely on the computer-readable storage medium 46.

In a case in which the wheel slip indicated by the fourth data D4 exceeds the wheel slip threshold, the method is abandoned.

This means that only in a case in which the wheel slip indicated by the fourth data D4 is inferior or equal to the wheel slip threshold, the method is continued.

Furthermore, also in the context of the fourth step S4, historic first data D1 and historic second data D2 is used. The historic first data D1 and the historic second data D2 is provided on the data storage unit 44, more precisely on the computer readable storage medium 46.

In order to evaluate a deviation of a current tire pressure from an expected tire pressure, the first data D1 is compared to the historic first data D1 and the second data D2 is compared to the historic second data D2.

A deviation of the current tire pressure from the expected tire pressure is determined under two cumulative conditions.

The first condition relates to the fact that the first data D1 is indicative of a higher torque than the historic first data D1. This means that at the point in time at which the method is executed, the wheel-specific electric drive machine 20 needs to provide a higher torque than at the point in time before that. This is considered to be due to the fact that tire pressure has decreased such that friction between tire 14 and an associated road surface has increased. In such a situation, the wheel-specific electric drive machine 20 needs to provide a higher torque in order to keep the vehicle 10 at a constant speed.

The second condition relates to the fact that the second data D2 is indicative of a higher rotational speed than the historic second data D2. This means that at the point in time at which the method is executed, the wheel-specific electric drive machine 20 needs to turn faster, i.e. at a higher rotational speed, than at the point in time before that. This is considered to be due to the fact that tire pressure has decreased such that a relevant rolling radius of the tire 14 has reduced. In such a situation, the wheel-specific electric drive machine 20 needs to turn faster in order to keep the vehicle at a constant speed.

Once these two conditions have been met, the third data D3 is used for verifying the results.

Also the third data D3 is compared to historic third data D3. This means that the rotational speed of the wheel 12 which is indicated by the third data D3 is compared to a historic speed of the wheel 12 as indicated by the historic third data D3. The verification of the determination of a deviation of the current tire pressure from the expected tire pressure is positive if the third data D3 is indicative of a higher rotational speed of the wheel 12 than the historic data. This is due to the same effect that has been explained above in connection with the rotational speed of the wheel-specific electric drive machine 20. Otherwise, the verification is negative.

Altogether, a deviation of a current tire pressure from an expected tire pressure is determined if the two above conditions are met and if the verification is positive.

In such a case, and information may be provided to a driver of the vehicle 10.

In a different example, evaluating a deviation of the current tire pressure from an expected tire pressure may be based on auxiliary first data indicative of a torque provided by another wheel-specific electric drive machine 20 and auxiliary second data indicative of a rotational speed of another wheel-specific electric drive machine 20. In this context, the other wheel-specific electric drive machine 20 designates an electric drive machine 20 of a wheel 12 for which the method currently is not executed. The wheel 12 may be associated with the same axle as the wheel 12 for which the method for monitoring tire pressure is currently executed. In simplified words, evaluating whether the current tire pressure deviates from an expected tire pressure relies on comparing the first data D1 and the auxiliary first data. This means that a torque provided by the wheel-specific electric drive machine 20 associated to the wheel 12 for which the method is executed is compared to a torque provided by the wheel-specific electric drive machine 20 associated to a wheel 12 for which the method is currently not executed. Since in the present example, the vehicle 10 is driving along a straight road segment, these torques should be substantially equal if the current tire pressure corresponds to the expected tire pressure. Otherwise, these torques differ.

Additionally or alternatively, auxiliary second data may be used in the same manner as the auxiliary first data.

It is noted that using auxiliary first data and/or auxiliary second data may replace using historic first data D1 and/or historic second data D2. However, it is also possible to combine the use of historic first data D 1 and/or historic second data D2 and auxiliary first data and/or auxiliary second data.

In still another example, the method further comprises determining expected first data and expected second data. This may be done using a simulation model which may be stored on the computer-readable storage medium 46 in which may be executed using the data processing unit 42. Consequently, an expected torque and an expected rotational speed of the wheel-specific electric drive machine 20 is determined using the simulation model.

Subsequently, the expected torque and expected rotational speed are compared to the torques as indicated by the first data D1 and the rotational speed as indicated by the second data D2, respectively. In a case in which the expected torque corresponds to the torque indicated by the first data D1 and the expected rotational speed corresponds to the rotational speed as indicated by the second data D2, it is assumed that the tire pressure corresponds to the expected tire pressure. Otherwise, it is determined that the tire pressure deviates from the expected tire pressure.

The advantage of using a simulation model is that the expected first data and the expected second data can be adapted depending on a driving situation. This means that the method can be executed with high reliability even if the vehicle 10 is not traveling along a straight road segment. This is for example the case if the vehicle is traveling along a curve. Obviously, in such a situation, torques and rotational speeds of wheels associated with the same axis are different. Otherwise, the vehicle would not be able to travel along the curve. However, using the simulation model, in such a situation it is possible to evaluate whether the current tire pressure deviates from an expected pressure.

In all of the above examples, the expected tire pressure may be considered to be predefined.

It is further noted that in all of the above examples, first data D 1 indicative of a torque provided by a wheel-specific electric drive machine 20 and second data D2 indicative of a rotational speed of a wheel-specific electric drive machine are used for monitoring a tire pressure of a vehicle 10.
Moreover, a torque sensor 28 associated with a wheel-specific electric drive machine 20 and a rotational speed sensor 34 associated with a wheel-specific electric drive machine 20 are used in a system 26 for monitoring a tire pressure of a vehicle.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: wheel
- 14: tire
- 16: drivetrain
- 18: battery
- 20: wheel-specific electric drive machine
- 22: inverter unit
- 24: control unit
- 26: system for monitoring tire pressure
- 28: torque sensor
- 30: current sensor
- 32: voltage sensor
- 34: rotational speed sensor
- 36: rotational speed sensor
- 38: means for determining a wheel slip
- 40: data processing apparatus
- 42: data processing unit
- 44: data storage unit
- 46: computer-readable storage medium
- 48: computer program
- 50: means for carrying out a method for monitoring a tire pressure of a vehicle

- D1: first data
- D2: second data
- D3: third data
- D4: fourth data
- S1: first step
- S2: second step
- S3: third step
- S4: fourth step

## Claims

1. A method for monitoring a tire pressure of a vehicle (10) having at least one wheel (12) with at least one tire (14) and at least one wheel-specific electric drive machine (20) associated with the at least one wheel (12), the method comprising:
- receiving first data (D 1) indicative of a torque provided by the at least one wheel-specific electric drive machine (20) and/or receiving second data (D2) indicative of a rotational speed of the at least one wheel-specific electric drive machine (20) (S1), and
- evaluating a deviation of a current tire pressure from an expected tire pressure based on the received first data (D1) and/or based on the received second data (D2) (S4).

2. The method of claim 1, wherein evaluating a deviation of a current tire pressure from an expected tire pressure is further based on historic first data (D1) and/or historic second data (D2).

3. The method of claim 1 or 2, where evaluating a deviation of a current tire pressure from an expected tire pressure is further based on auxiliary first data indicative of a torque provided by another wheel-specific electric drive machine (20) and/or auxiliary second data indicative of a rotational speed of another wheel-specific electric drive machine (20).

4. The method of any one of the preceding claims, wherein the expected tire pressure is predefined.

5. The method of any one of the preceding claims, further comprising determining one or more of the expected tire pressure, expected first data (D1) or expected second data (D2).

6. The method of any one of the preceding claims, further comprising receiving third data (D3) indicative of a rotational speed of the at least one wheel (12) and evaluating the deviation based on the received third data (D3) (S2).

7. The method of any one of the preceding claims, further comprising receiving fourth data (D4) indicative of a wheel slip associated with the at least one wheel (12) and evaluating the deviation only if the received fourth data (D4) is indicative of a wheel slip inferior to a wheel slip threshold (S3).

8. The method of any one of the preceding claims, wherein the first data (D1) indicative of the torque is indicative of a current and/or a voltage associated with the at least one wheel-specific electric drive machine (20).

9. A data processing apparatus (40) comprising means (50) for carrying out the method of any one of the preceding claims.

10. A computer program (48) comprising instructions which, when the computer program (48) is executed by a computer, cause the computer to carry out the method of claims 1 to 8.

11. A computer-readable storage medium (46) comprising instructions which, when executed by a computer, cause the computer to carry out the method of claims 1 to 8.

12. A system (26) for monitoring a tire pressure of a vehicle (10) having at least one wheel (12) with at least one tire (14) and at least one wheel-specific electric drive machine (20) associated with the at least one wheel (12), the system (26) comprising
- a torque sensor (28) associated with the at least one wheel-specific electric drive machine (20) and/or a rotational speed sensor (34) associated with the at least one wheel-specific electric drive machine (20), and
- a data processing apparatus (40) of claim 9, wherein the data processing apparatus (40) is communicatively connected to the torque sensor (28) and/or the rotational speed sensor (34).

13. The system (26) of claim 10, further comprising a rotational speed sensor (36) associated with the at least one wheel (12).

14. A use of first data (D 1) indicative of a torque provided by a wheel-specific electric drive machine (20) and/or second data (D2) indicative of a rotational speed of a wheel-specific electric drive machine (20) for monitoring a tire pressure of a vehicle (10).

15. A use of a torque sensor (28) associated with a wheel-specific electric drive machine (20) and/or a rotational speed sensor (34) associated with a wheel-specific electric drive machine (20) in a system (26) for monitoring a tire pressure of a vehicle (10).

## Amended claims

### Amended claims in accordance with Rule 137(2) EPC.

1. A method for monitoring a tire pressure of a vehicle (10) having at least one wheel (12) with at least one tire (14) and at least one wheel-specific electric drive machine (20) associated with the at least one wheel (12), wherein the vehicle (10) is traveling along a straight road segment or along a curved segment with a constant radius, the method comprising:
- receiving first data (D1) indicative of a torque provided by the at least one wheel-specific electric drive machine (20) and/or receiving second data (D2) indicative of a rotational speed of the at least one wheel-specific electric drive machine (20) (S1), and
- evaluating a deviation of a current tire pressure from an expected tire pressure based on the received first data (D1) and/or based on the received second data (D2) (S4).

2. The method of claim 1, wherein evaluating a deviation of a current tire pressure from an expected tire pressure is further based on historic first data (D1) and/or historic second data (D2).

3. The method of claim 1 or 2, where evaluating a deviation of a current tire pressure from an expected tire pressure is further based on auxiliary first data indicative of a torque provided by another wheel-specific electric drive machine (20) and/or auxiliary second data indicative of a rotational speed of another wheel-specific electric drive machine (20).

4. The method of any one of the preceding claims, wherein the expected tire pressure is predefined.

5. The method of any one of the preceding claims, further comprising determining one or more of the expected tire pressure, expected first data (D1) or expected second data (D2).

6. The method of any one of the preceding claims, further comprising receiving third data (D3) indicative of a rotational speed of the at least one wheel (12) and evaluating the deviation based on the received third data (D3) (S2).

7. The method of any one of the preceding claims, further comprising receiving fourth data (D4) indicative of a wheel slip associated with the at least one wheel (12) and evaluating the deviation only if the received fourth data (D4) is indicative of a wheel slip inferior to a wheel slip threshold (S3).

8. The method of any one of the preceding claims, wherein the first data (D1) indicative of the torque is indicative of a current and/or a voltage associated with the at least one wheel-specific electric drive machine (20).

9. A data processing apparatus (40) comprising means (50) for carrying out the method of any one of the preceding claims.

10. A computer program (48) comprising instructions which, when the computer program (48) is executed by a computer, cause the computer to carry out the method of claims 1 to 8.

11. A computer-readable storage medium (46) comprising instructions which, when executed by a computer, cause the computer to carry out the method of claims 1 to 8.

12. A system (26) for monitoring a tire pressure of a vehicle (10) having at least one wheel (12) with at least one tire (14) and at least one wheel-specific electric drive machine (20) associated with the at least one wheel (12), the system (26) comprising
- a torque sensor (28) associated with the at least one wheel-specific electric drive machine (20) and/or a rotational speed sensor (34) associated with the at least one wheel-specific electric drive machine (20), and
- a data processing apparatus (40) of claim 9, wherein the data processing apparatus (40) is communicatively connected to the torque sensor (28) and/or the rotational speed sensor (34).

13. The system (26) of claim 10, further comprising a rotational speed sensor (36) associated with the at least one wheel (12).

14. A use of first data (D1) indicative of a torque provided by a wheel-specific electric drive machine (20) and/or second data (D2) indicative of a rotational speed of a wheel-specific electric drive machine (20) for monitoring a tire pressure of a vehicle (10), wherein the vehicle (10) is traveling along a straight road segment or along a curved segment with a constant radius.

15. A use of a torque sensor (28) associated with a wheel-specific electric drive machine (20) and/or a rotational speed sensor (34) associated with a wheel-specific electric drive machine (20) in a system (26) for monitoring a tire pressure of a vehicle (10), wherein the vehicle (10) is traveling along a straight road segment or along a curved segment with a constant radius.
